# EUROPEAN PATENT APPLICATION

(11) **EP 4 546 665 A1**
(43) Date of publication of application: **30.04.2025**
(21) Application number: 24207145.4
(22) Date of filing: 17.10.2024
(51) Int. Cl.: H04B 10/2537, H04B 10/61, H04J 14/06

(54) **JOINT BACKSCATTER SUPPRESSION AND POLARIZATION TRACKING**

(30) Priority: 24.10.2023 US 202318493593
(71) Applicant: Nokia Solutions and Networks Oy, 02610 Espoo (FI)
(72) Inventor: Borkowski, Robert, Murray Hill, 07974-0636 (US); Vijayan, Kovendhan, Edison, 08817 (US)
(74) Representative: IP HILLS NV

(57) **Abstract**

Various example embodiments supporting optical communications in an optical communication system may be configured to support joint stimulated Brillouin scattering, SBS, suppression and polarization tracking for a set of orthogonal polarization optical channels in an intensity modulated / direct detection, IM/DD, passive optical network, PON. Various example embodiments may be configured to support joint SBS suppression and polarization tracking for a set of orthogonal polarization optical channels based on a set of frequency tones, e.g., using a single frequency tone per optical channel in the set of orthogonal polarization optical channels, respectively, such that SBS suppression is supported for transmissions from the transmitter, e.g., based on application of the frequency tones to the optical channels, and polarization tracking is supported at the receiver, e.g., based on use of one or more of the frequency tones of the optical channels in the set of orthogonal polarization optical channels for polarization tracking.

## Description

### TECHNICAL FIELD

Various example embodiments relate generally to optical communication systems and, more particularly but not exclusively, to supporting communications in passive optical networks (PONs).

### BACKGROUND

Various communications technologies may be used to support communications in various types of communication systems.

### SUMMARY

In at least some example embodiments, a system includes a transmitter and a receiver. The transmitter is configured to apply a first frequency tone to a first optical channel based on a first polarization and to apply a second frequency tone to a second optical channel based on a second polarization, where the first frequency tone and the second frequency tone are configured to support suppression of stimulated Brillouin scattering for transmissions from the transmitter, and where the first frequency tone and the second frequency tone are different. The receiver is configured to utilize at least one of the first frequency tone or the second frequency tone for polarization tracking of at least one of the first optical channel based on the first polarization or the second optical channel based on the second polarization. In at least some example embodiments, the first frequency tone and the second frequency tone are within a range of frequency tones configured for use in supporting suppression of stimulated Brillouin scattering. In at least some example embodiments, at least one of the first frequency tone or the second frequency tone is applied for amplitude modulation to support suppression of stimulated Brillouin scattering for transmissions from the transmitter. In at least some example embodiments, at least one of the first frequency tone or the second frequency tone is applied for phase modulation to support suppression of stimulated Brillouin scattering for transmissions from the transmitter. In at least some example embodiments, the first frequency tone is applied to at least one of a digital-to-analog converter associated with the first optical channel, an electrical amplifier associated with the first optical channel, a laser associated with the first optical channel, an external modulator associated with the first optical channel, a phase modulator associated with the first optical channel, or an optical amplifier associated with the first optical channel. In at least some example embodiments, the second frequency tone is applied to at least one of a digital-to-analog converter associated with the second optical channel, an electrical amplifier associated with the second optical channel, a laser associated with the second optical channel, an external modulator associated with the second optical channel, a phase modulator associated with the second optical channel, or an optical amplifier associated with the second optical channel. In at least some example embodiments, the transmitter includes a first frequency tone generator configured to generate the first frequency tone and apply the first frequency tone to the first optical channel and a second frequency tone generator configured to generate the second frequency tone and apply the second frequency tone to the second optical channel. In at least some example embodiments, at least one of the first frequency tone or the second frequency tone is extracted from at least one of the first optical channel or the second optical channel. In at least some example embodiments, at least one of the first frequency tone or the second frequency tone is extracted from at least one of an optical-to-electrical converter or an analog-to-digital converter. In at least some example embodiments, the receiver is configured to utilize at least one of the first frequency tone or the second frequency tone for polarization tracking of at least one of the first optical channel or the second optical channel at the receiver. In at least some example embodiments, the receiver is configured to generate, based on at least one of the first frequency tone or the second frequency tone, a feedback signal for a polarization controller, and perform, based on the feedback signal for the polarization controller, polarization tracking of at least one of the first optical channel or the second optical channel at the receiver. In at least some example embodiments, the receiver includes a polarization controller configured to perform polarization tracking for at least one of the first optical channel or the second optical channel and a controller configured to generate a feedback signal based on at least one of the first frequency tone or the second frequency tone and provide the feedback signal to the polarization controller.

In at least some example embodiments, an apparatus includes a transmitter. The transmitter is configured to apply a first frequency tone to a first optical channel based on a first polarization and a second frequency tone to a second optical channel based on a second polarization, where the first frequency tone and the second frequency tone are configured to support suppression of stimulated Brillouin scattering for transmissions from the transmitter, and where the first frequency tone and the second frequency tone are different. The transmitter is configured to propagate, toward a receiver, the first optical channel and the second optical channel, where at least one of the first frequency tone or the second frequency tone is configured for use by the receiver for polarization tracking of at least one of the first optical channel or the second optical channel at the receiver. In at least some example embodiments, a non-transitory computer-readable medium stores computer program instructions which, when executed by an apparatus, cause the apparatus at least to apply a first frequency tone to a first optical channel based on a first polarization and a second frequency tone to a second optical channel based on a second polarization, where the first frequency tone and the second frequency tone are configured to support suppression of stimulated Brillouin scattering for transmissions from the transmitter, and where the first frequency tone and the second frequency tone are different, and propagate, toward a receiver, the first optical channel and the second optical channel, where at least one of the first frequency tone or the second frequency tone is configured for use by the receiver for polarization tracking of at least one of the first optical channel or the second optical channel at the receiver. In at least some example embodiments, a method includes applying a first frequency tone to a first optical channel based on a first polarization and a second frequency tone to a second optical channel based on a second polarization, where the first frequency tone and the second frequency tone are configured to support suppression of stimulated Brillouin scattering for transmissions from the transmitter, and where the first frequency tone and the second frequency tone are different, and propagating, toward a receiver, the first optical channel and the second optical channel, where at least one of the first frequency tone or the second frequency tone is configured for use by the receiver for polarization tracking of at least one of the first optical channel or the second optical channel at the receiver. In at least some example embodiments, an apparatus includes means for applying a first frequency tone to a first optical channel based on a first polarization and a second frequency tone to a second optical channel based on a second polarization, where the first frequency tone and the second frequency tone are configured to support suppression of stimulated Brillouin scattering for transmissions from the transmitter, and where the first frequency tone and the second frequency tone are different, and means for propagating, toward a receiver, the first optical channel and the second optical channel, where at least one of the first frequency tone or the second frequency tone is configured for use by the receiver for polarization tracking of at least one of the first optical channel or the second optical channel at the receiver. In at least some example embodiments, the first frequency tone and the second frequency tone are within a range of frequency tones configured for use in supporting suppression of stimulated Brillouin scattering. In at least some example embodiments, at least one of the first frequency tone or the second frequency tone is applied for amplitude modulation to support suppression of stimulated Brillouin scattering for transmissions from the transmitter. In at least some example embodiments, at least one of the first frequency tone or the second frequency tone is applied for phase modulation to support suppression of stimulated Brillouin scattering for transmissions from the transmitter.

In at least some example embodiments, an apparatus includes a receiver. The receiver is configured to receive, from a transmitter, a first optical channel based on a first polarization and a second optical channel based on a second polarization. The receiver is configured to extract, from at least one of the first optical channel or the second optical channel, at least one of a first frequency tone or a second frequency tone, where the first frequency tone and the second frequency tone are configured to support suppression of stimulated Brillouin scattering for transmissions from the transmitter, and where the first frequency tone and the second frequency tone are different. The receiver is configured to perform, based on at least one of the first frequency tone or the second frequency tone, polarization tracking of at least one of the first optical channel or the second optical channel. In at least some example embodiments, a non-transitory computer-readable medium stores computer program instructions which, when executed by an apparatus, cause the apparatus at least to receive, from a transmitter, a first optical channel based on a first polarization and a second optical channel based on a second polarization, extract, from at least one of the first optical channel or the second optical channel, at least one of a first frequency tone or a second frequency tone, where the first frequency tone and the second frequency tone are configured to support suppression of stimulated Brillouin scattering for transmissions from the transmitter, and where the first frequency tone and the second frequency tone are different, and perform, based on at least one of the first frequency tone or the second frequency tone, polarization tracking of at least one of the first optical channel or the second optical channel. In at least some example embodiments, a method includes receiving, from a transmitter, a first optical channel based on a first polarization and a second optical channel based on a second polarization, extracting, from at least one of the first optical channel or the second optical channel, at least one of a first frequency tone or a second frequency tone, where the first frequency tone and the second frequency tone are configured to support suppression of stimulated Brillouin scattering for transmissions from the transmitter, and where the first frequency tone and the second frequency tone are different, and performing, based on at least one of the first frequency tone or the second frequency tone, polarization tracking of at least one of the first optical channel or the second optical channel. In at least some example embodiments, an apparatus includes means for receiving, from a transmitter, a first optical channel based on a first polarization and a second optical channel based on a second polarization, means for extracting, from at least one of the first optical channel or the second optical channel, at least one of a first frequency tone or a second frequency tone, where the first frequency tone and the second frequency tone are configured to support suppression of stimulated Brillouin scattering for transmissions from the transmitter, and where the first frequency tone and the second frequency tone are different, and means for performing, based on at least one of the first frequency tone or the second frequency tone, polarization tracking of at least one of the first optical channel or the second optical channel. In at least some example embodiments, the first frequency tone and the second frequency tone are within a range of frequency tones configured for use in supporting suppression of stimulated Brillouin scattering. In at least some example embodiments, the receiver is configured to utilize at least one of the first frequency tone or the second frequency tone for polarization tracking of at least one of the first optical channel or the second optical channel at the receiver. In at least some example embodiments, the receiver is configured to generate, based on at least one of the first frequency tone or the second frequency tone, a feedback signal for a polarization controller, and perform, based on the feedback signal for the polarization controller, polarization tracking of at least one of the first optical channel or the second optical channel at the receiver.

### BRIEF DESCRIPTION OF THE DRAWINGS

The teachings herein can be readily understood by considering the following detailed description in conjunction with the accompanying drawings, in which:
FIG. 1 depicts an example embodiment of a passive optical network (PON) including an optical line terminal (OLT) and optical network units (ONUs) where the PON is configured to support joint backscattering suppression and polarization tracking;
FIG. 2 depicts an example embodiment of a PON configured to support joint backscattering suppression at a transmitter and polarization tracking at a receiver;
FIG. 3 depicts an example embodiment of a method for use by a transmitter to support backscattering suppression in a PON configured to support joint backscattering suppression and polarization tracking;
FIG. 4 depicts an example embodiment of a method for use by a receiver to support polarization tracking in a PON configured to support joint backscattering suppression and polarization tracking; and
FIG. 5 depicts an example embodiment of a computer suitable for use in performing various functions presented herein.

To facilitate understanding, identical reference numerals have been used herein, wherever possible, in order to designate identical elements that are common among the various figures.

### DETAILED DESCRIPTION

Various example embodiments for supporting optical communications in an optical communication system are presented herein. Various example embodiments supporting optical communications in an optical communication system may be configured to support joint stimulated Brillouin scattering (SBS) suppression and polarization tracking for a set of orthogonal polarization optical channels in an intensity modulated / direct detection (IM/DD) passive optical network (PON). Various example embodiments for supporting joint SBS suppression and polarization tracking in an IM/DD PON may be configured to support joint SBS suppression and polarization tracking for a set of orthogonal polarization optical channels based on a set of frequency tones (e.g., using a single frequency tone per optical channel in the set of orthogonal polarization optical channels, respectively) such that SBS suppression is supported for transmissions from the transmitter (e.g., based on application of the frequency tones to the optical channels in the set of orthogonal polarization optical channels, respectively) and polarization tracking is supported at the receiver (e.g., based on use of one or more of the frequency tones of the optical channels in the set of orthogonal polarization optical channels for polarization tracking for the optical channels in the set of orthogonal polarization optical channels). It will be appreciated that these and various other example embodiments may be further understood by considering various aspects of PON systems more generally.

PON systems continue to evolve to support higher rates based on use of new PON technologies. The International Telecommunication Union - Telecommunication Standardization Sector (ITU-T) G.sup.VHSP document prepared by ITU-T Question 2/Study Group 15 (Q2/SG15) is a document that will describe requirements and technologies suitable for realization of beyond-50G PON solutions. The scope of technologies covered in the document includes, among others, use of IM/DD and coherent technologies to deliver Very High Speed PON (VHSP) services. While coherent technologies have various benefits, IM/DD technology generally provides lower complexity, power dissipation, and cost. Additionally, application of techniques multiplexing a pair of orthogonal polarization channels (orthogonal polarization techniques) to IM/DD to provide orthogonal polarization IM/DD transmission for PON may enable even higher PON rates to be achieved (e.g., 200G PON based on IM/DD 100G orthogonal polarization channels, 400GPON based on IM/DD 200G orthogonal polarization channels or 400GPON based on two-wavelength IM/DD 100G orthogonal polarization channels, or the like). While use of orthogonal polarization techniques enables increases in PON rates, use of orthogonal polarization techniques require application of polarization tracking at the receivers, thereby requiring additional complexity at the receivers of the PON systems.

PON systems that are designed to achieve higher rates generally rely on use of high launch power at the transmitter in order to reach the required PON link budget to overcome reduced receiver sensitivity as bitrates are increased. High power launched from the transmitter into the optical fiber causes an effect known as stimulated Brillouin scattering (SBS). At very high launch powers (typically in excess of +10dBm), SBS causes a significant amount of power to be backreflected to the transmitter. The strength of this effect depends on the fiber material property, the fiber length, and the launch power. The amount of reflected power increases with launch power, to the point where any further increase of launch power does not increase the output power. This may pose a problem in PON, since it prevents link budget increases by increasing the launch power. This problem became relevant for the first time in 50G PON and will continue to be problematic for PONs utilizing high launch power, such as VHSP PON relying on IM/DD, and SBS mitigation is considered as a potential solution to achieve the required loss budget when launching high powers into the fiber. While use of SBS suppression enables increases in PON link budget, application of SBS suppression techniques at the transmitter requires additional complexity at the receiver of the PON systems.

Various example embodiments presented herein may be configured to support joint SBS suppression and polarization tracking in various PON systems. The example embodiments may be applicable to various PON systems operating at high launch power, including existing and potential future PON systems, and particularly, but not exclusively, systems with residual or non-suppressed carriers (such as intensity modulation systems) which employ orthogonal polarization receivers performing polarization demultiplexing in optical domain or polarization-sensitive receivers relying on polarization stabilization/tracking in front of the receiver (e.g., receivers including polarization-sensitive components or receivers based on beating the received signal with a reference laser), and which support polarization tracking based on a low-frequency marker tone. The example embodiments may be based on use of a single tone per transmitted channel (polarization or wavelength) to perform SBS suppression (for all of the polarization/wavelength channels) and polarization tracking for that channel, or for the orthogonal polarization channel, possibly for more than one wavelength channel at a time.

Various example embodiments for supporting joint SBS suppression and polarization tracking in PON systems may be based on SBS suppression that is performed based on phase modulation. In at least some example embodiments, SBS suppression can be performed by phase broadening of the source laser linewidth, which, as discussed further below, may be achieved in various ways. For example, SBS suppression can be performed by using electrical or mechanical modulation, carrier-suppressed or carrier-reduced modulation formats, SBS dithering (e.g., where the dithering may be applied optically or electrically), or the like, as well as various combinations thereof. The same tone used for inducing of phase modulation to provide the SBS suppression is then used at the receiver to perform polarization tracking/alignment. It will be appreciated that per-channel tones may be used in various other ways to support SBS suppression based on phase modulation within the context of supporting joint SBS suppression and polarization tracking.

Various example embodiments for supporting joint SBS suppression and polarization tracking in PON systems may be based on SBS suppression that is performed based on amplitude modulation. In at least some example embodiments, SBS suppression can be performed by amplitude modulation of a semiconductor laser, which, due to amplitude-phase coupling in semiconductor devices (e.g., an injection of electrical carriers during amplitude modulation changes cavity refractive index, which leads to phase modulation), leads to phase modulation of the signal. For this purpose, devices such as distributed-feedback lasers (DFBs), directly-modulated lasers (DMI,s), electro-absorption modulators (EAMs), external modulators (e.g., Mach-Zehnder modulators or the like), or their various combinations (e.g., electroabsorption-modulated lasers (EMI,s) or externally-modulated lasers) can be employed, where the tone can be applied to one of: DFB or DML laser bias current, EAM or EML bias voltage, or the data signal applied to the DML, the EAM, or the EML. The same modulation can then be used to perform polarization tracking/alignment by maximizing the amplitude of the tracking tone in the signal after polarization splitter/polarizer (in general, any optical element with high polarization extinction ratio). It will be appreciated that per-channel tones may be used in various other ways to support SBS suppression based on amplitude modulation within the context of supporting joint SBS suppression and polarization tracking.

Various example embodiments for supporting joint SBS suppression and polarization tracking in PON systems may be based on polarization tracking that, as indicated above, may be provided in various ways (at least some of which may depend on the manner in which the SBS suppression is implemented). Since each polarization channel uses a different tone for SBS suppression, tracking/alignment can be also performed by minimizing the tone of the orthogonal polarization channel, or based on a joint metric based on two or more tones originating from two or more channels. The amplitude and frequency of the tone or tones applied for SBS suppression and polarization tracking on each channel can be adjusted so as to provide the best tradeoff between SBS suppression efficiency and polarization tracking/alignment error. For example, since multiple SBS dither tones can provide better SBS suppression efficiency than a single tone, each polarization channel in an orthogonal polarization system can use an amplitude tone of a different frequency to provide high SBS suppression efficiency combined with the benefit of allowing for polarization tracking/alignment at the receiver using a two-tone metric. It will be appreciated that per-channel tones may be used in various other ways to support polarization tracking within the context of supporting joint SBS suppression and polarization tracking.

It will be appreciated that these and various other example embodiments for supporting joint SBS suppression and polarization tracking in PON systems, and advantages or potential advantages for supporting joint SBS suppression and polarization tracking in PON systems, may be further understood by way of reference to the various figures, which are discussed further below.

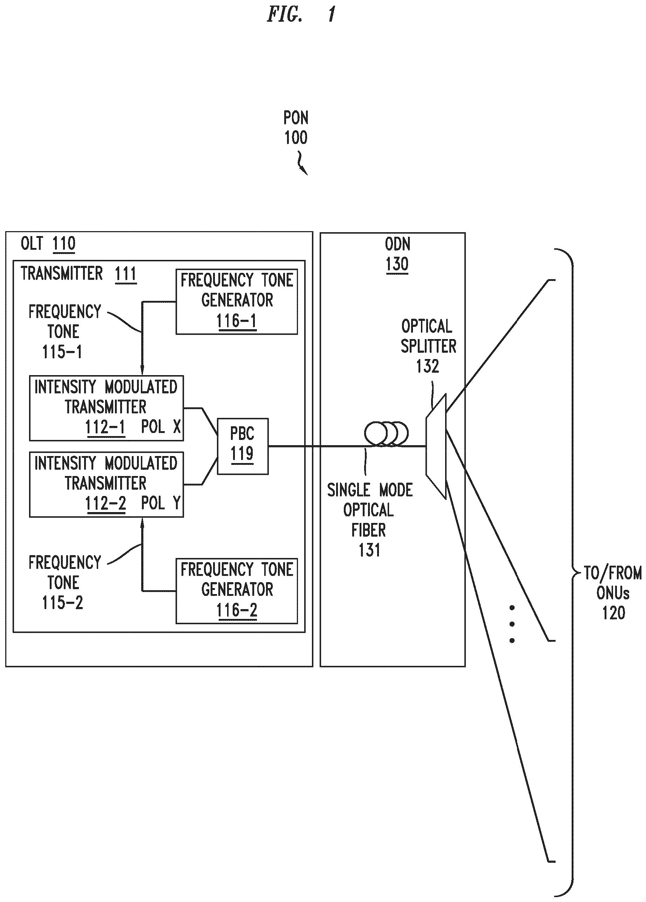

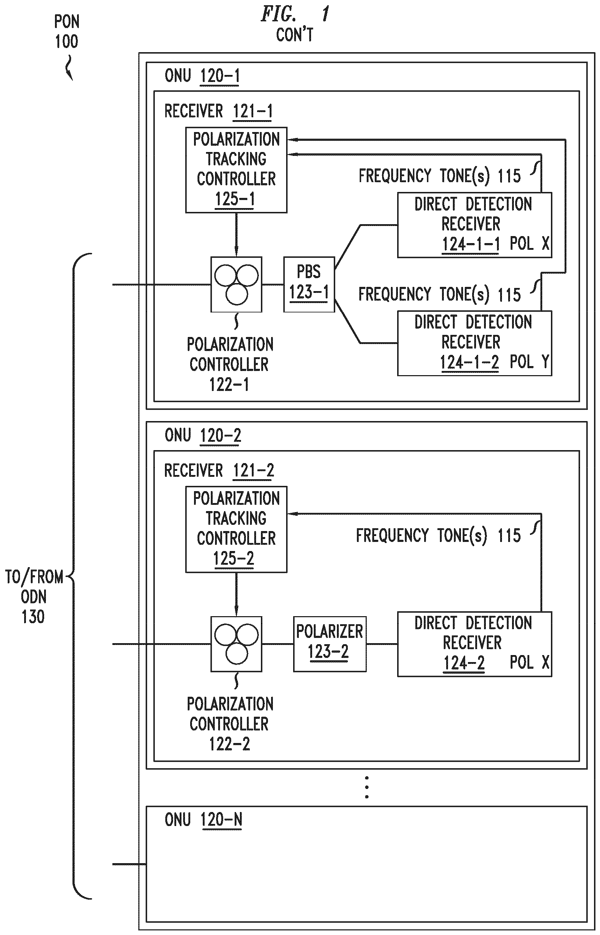

FIG. 1 depicts an example embodiment of a passive optical network (PON) including an optical line terminal (OLT) and optical network units (ONUs) where the PON is configured to support joint backscattering suppression and polarization tracking.

The PON 100 is configured to use fiber-optic telecommunications technology for delivering broadband network access to end-customers for supporting communications for the end-customers. The PON 100 includes an optical line terminal (OLT) 110 and a set of optical network units (ONUs) 120-1 - 120-N (collectively, ONUs 120) connected via an optical distribution network (ODN) 130. The PON 100 may be configured to support downstream communications from the OLT 110 to the ONUs 120 via the ODN 130 and upstream communications from the ONUs 120 to the OLT 110 via the ODN 130. The PON 100 may be configured to operate using various types of PON technologies, which may be based on various PON standards, to achieve various types of PONs (e.g., 50GPON, 100G PON, 200GPON, 400G PON, or the like, as well as various combinations thereof. It will be appreciated that the PON 100 may include various other elements which have been omitted for purposes of clarity, may be based on various other PON technologies and/or standards, or the like, as well as various combinations thereof.

The OLT 110 is configured to support communications between the ONUs 120 and one or more upstream networks (omitted for purposes of clarity). The OLT 110 may be located in a central location relative to the ONUs 120, such as a central office (CO) or other suitable location located within the vicinity of the ONUs 120. For example, the one or more upstream networks may include one or more core communication networks configured to support communications of the OLT 110 and, thus, of the ONUs 120. For example, the OLT 110 may be configured to forward data received from the one or more upstream networks downstream toward the ONUs 120 via the ODN 130 and to forward data received from the ONUs 120 via the ODN 130 upstream toward the one or more upstream networks. The OLT 110 includes a transmitter 111 configured to support orthogonal polarization based communications from the OLT 110 to the ONUs 120 and configured to support SBS suppression for the orthogonal polarization based communications from the OLT 110 to the ONUs 120. It will be appreciated that the OLT 110 may include various other elements for supporting communications with the ONUs 120 (e.g., one or more receivers for upstream communications from the ONUs 120 or other suitable elements).

The ONUs 120 each are configured to support communications between the OLT 110 and one or more downstream networks or devices (omitted for purposes of clarity). The ONUs 120 may be located at respective customer premises or other suitable locations. For example, the downstream networks or devices for an ONU 120 may include one or more local area networks (LANs) of the customer, one or more communication devices of the customer (e.g., a modem, a router, a switch, a set top box, a smart television, a gaming system, a computer, a smartphone, or the like, as well as various combinations thereof). For example, each of the ONUs 120 may be configured to forward data received from the OLT 110 via the ODN 130 downstream toward one or more downstream networks or devices and to forward data received from the one or more downstream networks or devices upstream toward the OLT 110 via the ODN 130. The ONUs 120-1 to 120-N include receivers 121-1 to 121-N (collectively, receivers 121), respectively, configured to support orthogonal polarization based communications from the OLT 110 to the ONUs 120 and configured to support polarization tracking for the orthogonal polarization based communications from the OLT 110 to the ONUs 120. It will be appreciated that each of the ONUs 120 may include various other elements for supporting communications with the OLT 110 (e.g., transmitters for upstream communications to the OLT 110 or other suitable elements).

The ODN 130 may be a data distribution system configured to support communications between the OLT 110 and the ONUs 120. The ODN 130 is configured to support propagation of optical signals downstream from the OLT 110 toward the ONUs 120 and propagation of optical signals upstream from the ONUs 120 toward the OLT 110. The ODN 130 includes a single mode optical fiber 131 and an optical splitter 132, where the single mode optical fiber 131 connects the OLT 110 to the optical splitter 132 and where the optical splitter 132 supports splitting of downstream optical signals received from the OLT 110 via the single mode optical fiber 131 toward the ONUs 120. It will be appreciated that the ODN 130, although primarily presented as including a single optical splitter 132, may include multiple optical splitters which may be arranged hierarchically for splitting the downstream optical signals for delivery to the ONUs 120. It will be appreciated that the ODN 130 may include various other elements for supporting communications between the OLT 110 and the ONUs 120.

The PON 100 may be configured to support joint SBS suppression and polarization tracking for a pair of orthogonal polarization optical channels based on a pair of frequency tones (i.e., using a single frequency tone per optical channel in the pair of orthogonal polarization optical channels) such that SBS suppression for transmissions from the transmitter 111 and polarization tracking at the receiver 121 may be achieved based on the pair of frequency tones. The pair of frequency tones includes a first frequency tone used to provide SBS suppression for transmissions from the transmitter 111 for a first optical channel based on a first polarization and a second frequency tone used to provide SBS suppression for transmissions from the transmitter 111 for a second optical channel based on a second polarization, where either or both of the first frequency tone or the second frequency tone may be extracted and used at the receiver 121 for polarization tracking of the first optical channel based on the first polarization and polarization tracking of the second optical channel based on the second polarization. The pair of frequency tones may be suitable for use in providing SBS suppression for transmissions from the transmitter 111 (e.g., selected from a range of frequency tones suitable for use in providing SBS suppression, and also may be suitable for use in performing polarization tracking at the receiver 121 (e.g., the frequency tones may be different from each other). The use of the pair of frequency tones for supporting joint SBS suppression and polarization tracking in the PON 100 is discussed further below.

The transmitter 111 may be based on intensity modulation (IM) and may support a pair of orthogonal polarization optical channels based on a pair of polarizations (namely, a first optical channel that is based on a first polarization and a second optical channel that is based on a second polarization). The first optical channel may be based on modulation of data onto the first polarization for transmission toward the ONUs 120 (e.g., an optical channel carrying data in the first polarization, where the optical channel may be formed by modulation of an optical carrier with a data signal carrying the data to be transported by the optical channel). The second optical channel may be based on modulation of data onto the second polarization for transmission toward the ONUs 120 (e.g., an optical channel carrying data in the second polarization, where the optical channel may be formed by modulation of an optical carrier with a data signal carrying the data to be transported by the optical channel). In the PON 100, the SBS suppression for transmissions from the transmitter 111 may be based on application of a first frequency tone to the first optical channel that is based on the first polarization and based on application of a second frequency tone to the second optical channel that is based on the second polarization.

The transmitter 111 includes a first IM transmitter 112-1 based on a first polarization and a second IM transmitter 112-2 based on a second polarization, which may be referred to collectively as IM transmitters 112. The first IM transmitter 112-1 is configured to generate a first optical channel, for transporting data from the OLT 110 toward the ONUs 120, based on a first polarization. The second IM transmitter 112-2 is configured to generate a second optical channel, for transporting data from the OLT 110 toward the ONUs 120, based on a second polarization. The transmitter 111 includes a polarization beam combiner (PBC) 119 configured to combine the first optical channel based on the first polarization and the second optical channel based on the second polarization to provide a combined optical signal for transmission toward the ONUs 120 via the single mode optical fiber 131 of the ODN 130.

The transmitter 111 is configured to support SBS suppression for optical signals transmitted into the single mode optical fiber 131 (e.g., for the combined optical signal based on the first optical channel based on the first polarization and the second optical channel based on the second polarization). The transmitter 111 is configured to support SBS suppression based on application of a pair of frequency tones 115-1 and 115-2 (collectively, frequency tones 115) to the optical channels at the IM transmitters 112. The first frequency tone 115-1 is generated by a frequency tone generator 116-1 and provided to the first IM transmitter 112-1 for application of the first frequency tone 115-1 by the first IM transmitter 112-1 to the first optical channel based on the first polarization and, similarly, the second frequency tone 115-2 is generated by a frequency tone generator 116-2 and provided to the second IM transmitter 112-2 for application of the second frequency tone 115-2 by the second IM transmitter 112-2 to the second optical channel based on the second polarization. The frequency tones 115 may be applied to the optical channels in various ways for supporting SBS suppression. For example, the frequency tones 115 may be applied to the optical channels by applying the frequency tones 115 for phase modulation (e.g., using the frequency tones 115 for one or more of mechanical or electrical modulation, carrier-suppressed or carrier-reduced modulation formats, electrical or optical SBS dithering, external cavity lasers, or the like) or amplitude modulation (based on application of the frequency tones 115 to one or more of DFB or DML laser bias current, EAM or EML bias voltage, the data signal applied to the DML, the EAM, or the EML, or the like).

The receivers 121 may be based on direction detection (DD) and may support a pair of orthogonal polarization optical channels based on a pair of polarizations (namely, a first optical channel that is based on a first polarization and a second optical channel that is based on a second polarization). The first optical channel may support transport of data using a first polarization based on modulation of data onto the first polarization by the OLT 110 and the second optical channel may support transport of data using a second polarization based on modulation of data onto the second polarization by the OLT 110. The receivers 121 may support recovery of data from either or both of the optical channels in the pair of orthogonal polarization optical channels (e.g., the ONU 120-1 includes a receiver 121 that supports recovery of data from both of the optical channels in the pair of orthogonal polarization optical channels, whereas the ONU 120-2 includes a receiver 121-2 that supports recovery of data from only one of the optical channels in the pair of orthogonal polarization optical channels). In the PON 100, the polarization tracking at the receivers 121 may be based on use of either or both of a first frequency tone applied to the first optical channel at the OLT 110 for SBS suppression (namely, the first frequency tone 115-1) or a second frequency tone applied to the second optical channel at the OLT 110 for SBS suppression (namely, the second frequency tone 115-2).

The receiver 121-1 includes a polarization controller 122-1, a polarization beam splitter (PBS) 123-1, a pair of DD receivers 124-1-1 and 124-1-2 (collectively, DD receivers 124-1), and a polarization tracking controller 125-1. The polarization controller 122-1 receives a downstream optical signal from the optical splitter 132 of the ODN 130, performs polarization control for aligning the polarizations of the orthogonal polarization optical channels of the downstream optical signal, and provides the polarization-aligned downstream optical signal to the PBS 123-1. The PBS 123-1 receives the polarization-aligned downstream optical signal, splits the polarization-aligned downstream optical signal into the first optical channel based on the first polarization and the second optical channel based on the second polarization, and provides the first optical channel based on the first polarization to the DD receiver 124-1-1 and provides the second optical channel based on the second polarization to the DD receiver 124-1-2. The DD receiver 124-1-1 recovers, from the first optical channel based on the first polarization, data transmitted by the OLT 110 and, similarly, DD receiver 124-1-2 recovers, from the second optical channel based on the second polarization, data transmitted by the OLT 110.

The receiver 121-1 is configured to support polarization tracking for the pair of orthogonal polarization optical channels (e.g., for the downstream optical signal including the first optical channel based on the first polarization and the second optical channel based on the second polarization). The receiver 121-1 is configured to support polarization tracking for the pair of orthogonal polarization optical channels based on either or both of the frequency tones 115 used at the transmitter 111 for SBS suppression. The frequency tone 115-1 may be extracted from the first optical channel by the DD receiver 124-1-1 and provided to the polarization tracking controller 125-1. The frequency tone 115-2 may be extracted by the second optical channel from the DD receiver 124-1-2 and provided to the polarization tracking controller 125-1. The frequency tones 115-1 and 115-2 both may be extracted from one of the optical channels (e.g., from the first optical channel by the DD receiver 124-1-1 or from the second optical channel by the DD receiver 124-1-2). The polarization tracking controller 125-1 may process the frequency tone(s) 115 received from the DD receiver(s) 124-1 and generate a feedback signal which is provided to the polarization controller 122-1 for controlling alignment of the polarizations of the orthogonal polarization optical channels of the downstream optical signal received at the receiver 121-1. The polarization tracking controller 125-2 may calculate a metric based on the frequency tone(s) 115 received from the DD receiver(s) 124-1 and generate, based on the metric, the feedback signal which is provided to the polarization controller 122-1 for controlling alignment of the polarizations of the orthogonal polarization optical channels of the downstream optical signal received at the receiver 121-1. The polarization tracking controller 125-2 may calculate the metric with an objecting of optimizing one or more settings of the polarization controller 122-1 (e.g., one or more setting configured for maximizing one of the frequency tones 115 and minimizing the other of the frequency tones 115. The frequency tone(s) 115 may be processed by the polarization tracking controller 125-1 in various ways for supporting polarization tracking.

The receiver 121-2 includes polarization controller 122-2, a polarizer 123-2, a DD receiver 124-2, and a polarization tracking controller 125-2. The polarization controller 122-2 receives a downstream optical signal from the optical splitter 132 of the ODN 130, performs polarization control for aligning the polarizations of the orthogonal polarization optical channels of the downstream optical signal, and provides the polarization-aligned downstream optical signal to the polarizer 123-2. The polarizer 123-1 receives the polarization-aligned downstream optical signal, passes the first optical channel based on the first polarization and blocks the second optical channel based on the second polarization (since the DD receiver 124-2 is configured to process optical signals based on the first polarization), and provides the first optical channel based on the first polarization to the DD receiver 124-2. The DD receiver 124-2 recovers, from the first optical channel based on the first polarization, data transmitted by the OLT 110.

The receiver 121-2 is configured to support polarization tracking for the pair of orthogonal polarization optical channels (e.g., for the downstream optical signal including the first optical channel based on the first polarization and the second optical channel based on the second polarization). The receiver 121-2 is configured to support polarization tracking for the pair of orthogonal polarization optical channels based on either or both of the frequency tones 115 used at the transmitter 111 for SBS suppression. The frequency tone(s) 115 may be extracted from the first optical channel by the DD receiver 124-2 and provided to the polarization tracking controller 125-2. The polarization tracking controller 125-2 may process the frequency tone(s) 115 received from the DD receiver 124-2 and generate a feedback signal which is provided to the polarization controller 122-2 for controlling alignment of the polarizations of the orthogonal polarization optical channels of the downstream optical signal received at the receiver 121-2. The polarization tracking controller 125-2 may calculate a metric based on the frequency tone(s) 115 received from the DD receiver 124-2 and generate, based on the metric, the feedback signal which is provided to the polarization controller 122-2 for controlling alignment of the polarizations of the orthogonal polarization optical channels of the downstream optical signal received at the receiver 121-2. The polarization tracking controller 125-2 may calculate the metric with an objecting of optimizing one or more settings of the polarization controller 122-2 (e.g., one or more setting configured for maximizing one of the frequency tones 115 and minimizing the other of the frequency tones 115). The frequency tone(s) 115 may be processed by the polarization tracking controller 125-2 in various ways for supporting polarization tracking.

The receivers 121 may be configured to perform polarization tracking in various ways, which may depend on the manner in which the frequency tones 115 are applied for SBS suppression for transmissions from the transmitter 111. For example, where phase modulation based on a frequency tone 115 is used at the transmitter 111 for SBS suppression, the same frequency tone 115 used for phase modulation to provide the SBS suppression for transmissions from the transmitter 111 then may be used at the receiver 121 to perform polarization tracking/alignment. For example, where amplitude modulation based on a frequency tone 115 is used at the transmitter 111 for SBS suppression, the same modulation can then be used to perform polarization tracking/alignment by maximizing the amplitude of the frequency tone 115 in the signal after the PBS 123-1 / polarizer 123-2 (in general, any optical element with high polarization extinction ratio). It will be appreciated that the frequency tone(s) 115 may be used in various other ways for supporting polarization tracking at the receivers 121.

It will be appreciated that the PON 100, although primarily described with respect to specific types, numbers, and arrangements of elements, may be implemented using various other types of elements, various other numbers of elements, various other arrangements of elements, or the like, as well as various combinations thereof.

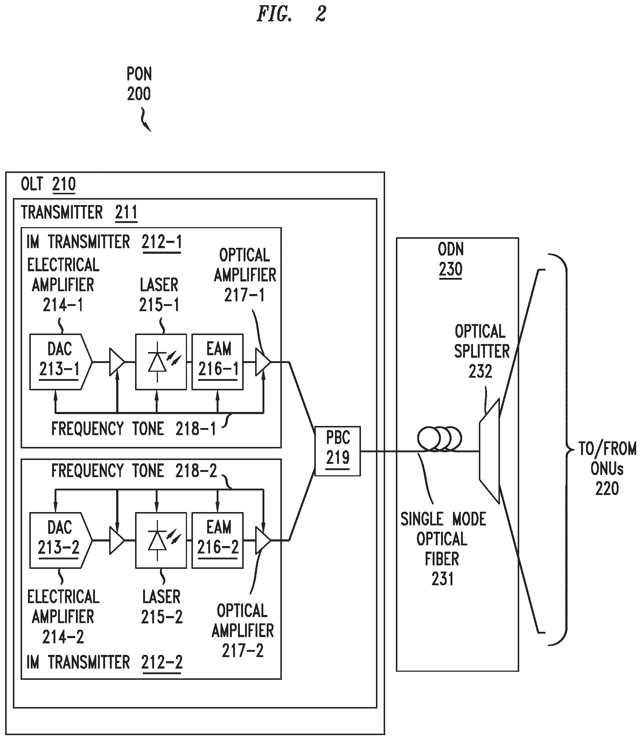

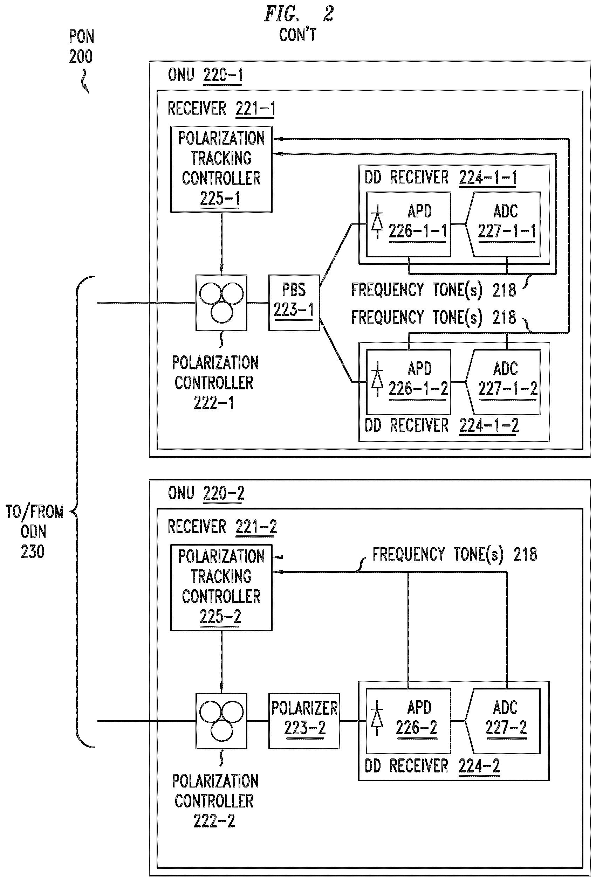

FIG. 2 depicts an example embodiment of a PON configured to support joint backscattering suppression at a transmitter and polarization tracking at a receiver.

The PON 200 includes an OLT 210 and an ONU 220 interconnected via a single mode optical fiber 231. The PON 200 may correspond to a portion of the PON 100 of FIG. 1. The PON includes an OLT 210 and a pair of ONUs 220-1 and 220-2 (collectively, ONUs 220), where the OLT 210 may correspond to an example embodiment of the OLT 110 of FIG. 1 and where the ONUs 220-1 and 220-2 may correspond to example embodiments of the ONUs 120-1 and 120-2, respectively, of FIG. 1. The PON 200 also includes an ODN 230, where the ODN 230 may correspond to an example embodiment of the ODN 130 of FIG. 1 (e.g., including a single mode optical fiber 231 and an optical splitter 232 which may correspond to example embodiments of the single mode optical fiber 131 and the optical splitter 132, respectively, of FIG. 1).

The OLT 210 includes a transmitter 211. The transmitter 211 includes a first IM transmitter 212-1 based on a first polarization and a second IM transmitter 212-2 based on a second polarization, which may be referred to collectively as IM transmitters 212. The first IM transmitter 212-1 is configured to generate a first optical channel, for transporting data from the OLT 210 toward the ONU 220, based on a first polarization. The second IM transmitter 212-2 is configured to generate a second optical channel, for transporting data from the OLT 210 toward the ONU 220, based on a second polarization. The transmitter 211 includes a polarization beam combiner (PBC) 219 configured to combine the first optical channel based on the first polarization and the second optical channel 212-2 based on the second polarization, where the first polarization and the second polarization are orthogonal to each other, to provide a combined optical signal for transmission toward the ONU 220 via the single mode optical fiber 231 of the ODN 230. The transmitter 211 is configured to support SBS suppression for optical signals transmitted into the single mode optical fiber 231 based on application of a pair of frequency tones 218-1 and 218-2 (collectively, frequency tones 218) to the optical channels at the IM transmitters 212.

The transmitter 211 is configured to support SBS suppression for the optical signals provided by the first IM transmitter 212-1 based on the frequency tone 218-1. The first IM transmitter 212-1 includes a digital-to-analog converter (DAC) 213-1, an electrical amplifier 214-1, a laser 215-1, an electro-absorption modulator (EAM) 216-1, and an optical amplifier 217-1. As illustrated in FIG. 2, the application of the frequency tone 218-1 to the optical channel associated with the first IM transmitter 212-1 may be based on application of the frequency tone 218-1 to the DAC 213-1, application of the frequency tone 218-1 to the laser 215-1 (e.g., via application to a bias current), or application of the frequency tone 218-1 to the EAM 216-1 (e.g., via application to a bias voltage). It will be appreciated that, although primarily presented with respect to a specific implementation of the first IM transmitter 212-1 (namely, including specific components arranged in a specific arrangement), the first IM transmitter 212-1 may be implemented in various other ways (e.g., using a different sequence of the components, using a different set of components, or the like, as well as various combinations thereof) and, thus, that the application of the frequency tone 218-1 to the optical channel at the first IM transmitter 212-1 also may be implemented in various other ways.

The transmitter 211 is configured to support SBS suppression for the optical signals provided by the second IM transmitter 212-2 based on the frequency tone 218-2. The second IM transmitter 212-2 includes a digital-to-analog converter (DAC) 213-2, an electrical amplifier 214-2, a laser 215-2, an electro-absorption modulator (EAM) 216-2, and an optical amplifier 217-2. As illustrated in FIG. 2, the application of the frequency tone 218-2 to the optical channel associated with the second IM transmitter 212-2 may be based on application of the frequency tone 218-2 to the DAC 213-2, application of the frequency tone 218-2 to the laser 215-2 (e.g., via application to a bias current), or application of the frequency tone 218-2 to the EAM 216-2 (e.g., via application to a bias voltage). It will be appreciated that, although primarily presented with respect to a specific implementation of the second IM transmitter 212-2 (namely, including specific components arranged in a specific arrangement), the second IM transmitter 212-2 may be implemented in various other ways (e.g., using a different sequence of the components, using a different set of components, or the like, as well as various combinations thereof) and, thus, that the application of the frequency tone 218-2 to the optical channel at the second IM transmitter 212-2 also may be implemented in various other ways.

The ONU 220-1 includes a receiver 221-1. The receiver 221-1 includes a polarization controller 222-1, a polarization beam splitter (PBS) 223-1, a pair of DD receivers 224-1-1 and 224-1-2 (collectively, DD receivers 224-1), and a polarization tracking controller 225-1. The polarization controller 222-1 receives a downstream optical signal, performs polarization control for aligning the polarizations of the orthogonal polarization optical channels of the downstream optical signal, and provides the polarization-aligned downstream optical signal to the PBS 223-1. The PBS 223-1 receives the polarization-aligned downstream optical signal, splits the polarization-aligned downstream optical signal into the first optical channel based on the first polarization and the second optical channel based on the second polarization, and provides the first optical channel based on the first polarization to the DD receiver 224-1-1 and provides the second optical channel based on the second polarization to the DD receiver 224-1-2. The DD receiver 224-1-1 recovers, from the first optical channel based on the first polarization, data transmitted by the OLT 210 and, similarly, DD receiver 224-1-2 recovers, from the second optical channel based on the second polarization, data transmitted by the OLT 210. The receiver 221-1 is configured to support polarization tracking for the pair of orthogonal polarization optical channels (e.g., for the downstream optical signal including the first optical channel based on the first polarization and the second optical channel based on the second polarization) based on either or both of frequency tones 218-1 and 218-2 applied to the optical channels at the OLT 210.

The receiver 221-1 is configured to support polarization tracking for the pair of orthogonal polarization optical channels (e.g., for the downstream optical signal including the first optical channel based on the first polarization and the second optical channel based on the second polarization). The receiver 221-1 is configured to support polarization tracking for the pair of orthogonal polarization optical channels based on either or both of the frequency tones 218 used at the transmitter 211 for SBS suppression. The DD receiver 224-1-1 includes an avalanche photodiode (APD) 226-1-1 and an analog-to-digital converter (ADC) 227-1-1, and either or both of the frequency tones 218 may be extracted from either or both of the APD 226-1-1 and the ADC 227-1-1 and provided to the polarization tracking controller 225-1 for use in controlling the polarization controller 222-1 that controls alignment of the polarizations of the orthogonal polarization optical channels of the downstream optical signal. The DD receiver 224-1-2 includes an APD 226-1-2 and an ADC 227-1-2, and the either or both of the frequency tones 218 may be extracted from either or both of the APD 226-1-2 and the ADC 227-1-2 and provided to the polarization tracking controller 225-1 for use in controlling the polarization controller 222-1 that controls alignment of the polarizations of the orthogonal polarization optical channels of the downstream optical signal. The frequency tone(s) 218 may be processed by the polarization tracking controller 225-1 in various ways for supporting polarization tracking.

The ONU 220-2 includes a receiver 221-2. The receiver 221-2 includes a polarization controller 222-2, a polarizer 223-2, a DD receiver 224-2, and a polarization tracking controller 225-2. The polarization controller 222-2 receives a downstream optical signal, performs polarization control for aligning the polarizations of the orthogonal polarization optical channels of the downstream optical signal, and provides the polarization-aligned downstream optical signal to the polarizer 223-2. The polarizer 223-2 receives the polarization-aligned downstream optical signal and provides either the first optical channel based on the first polarization or the second optical channel based on the second polarization to the DD receiver 224-2. The DD receiver 224-2 recovers, from the first optical channel based on the first polarization or the second optical channel based on the second polarization, data transmitted by the OLT 210. The receiver 221-2 is configured to support polarization tracking for the pair of orthogonal polarization optical channels (e.g., for the downstream optical signal including the first optical channel based on the first polarization and the second optical channel based on the second polarization) based on either or both of frequency tones 218-1 and 218-2 applied to the optical channels at the OLT 210.

The receiver 221-2 is configured to support polarization tracking for the pair of orthogonal polarization optical channels (e.g., for the downstream optical signal including the first optical channel based on the first polarization and the second optical channel based on the second polarization). The receiver 221-2 is configured to support polarization tracking for the pair of orthogonal polarization optical channels based on either or both of the frequency tones 218 used at the transmitter 211 for SBS suppression. The DD receiver 224-2 includes an avalanche photodiode (APD) 226-2 and an analog-to-digital converter (ADC) 227-2, and the frequency tone 218-1 may be extracted from either or both of the APD 226-1-1 and the ADC 227-1-1 and provided to the polarization tracking controller 225-1 for use in controlling the polarization controller 222-1 that controls alignment of the polarizations of the orthogonal polarization optical channels of the downstream optical signal. The frequency tone(s) 218 may be processed by the polarization tracking controller 225-2 in various ways for supporting polarization tracking. It will be appreciated that, although primarily presented with respect to example embodiments in which extraction of the frequency tone(s) from the optical channel(s) is performed in-band from one or more components supporting the optical channel(s), it at least some example embodiments extraction of the frequency tone(s) may be performed out-of-band from the one or more components supporting the optical channels. For example, in ONU 220-1, where either or both of the optical frequencies is extracted from the first optical channel, an optical splitter may be disposed between the PBS 223-1 and the DD receiver 224-1-1 for splitting the optical signal and directing the optical signal to a monitoring APD (or other suitable component) which may extract the frequency tone(s) and provide the extracted frequency tone(s) to the polarization tracking controller 225-1 for use in controlling the polarization controller 222-1 that controls alignment of the polarizations of the orthogonal polarization optical channels of the downstream optical signal. For example, in ONU 220-1, where either or both of the optical frequencies is extracted from the second optical channel, an optical splitter may be disposed between the PBS 223-1 and the DD receiver 224-1-2 for splitting the optical signal and directing the optical signal to a monitoring APD (or other suitable component) which may extract the frequency tone(s) and provide the extracted frequency tone(s) to the polarization tracking controller 225-1 for use in controlling the polarization controller 222-1 that controls alignment of the polarizations of the orthogonal polarization optical channels of the downstream optical signal. For example, in ONU 220-2, an optical splitter may be disposed between the polarizer 223-2 and the DD receiver 224-2 for splitting the optical signal and directing the optical signal to a monitoring APD (or other suitable component) which may extract the frequency tone(s) and provide the extracted frequency tone(s) to the polarization tracking controller 225-2 for use in controlling the polarization controller 222-2 that controls alignment of the polarizations of the orthogonal polarization optical channels of the downstream optical signal. It will be appreciated that the optical frequency tone(s) may be extracted in various other ways.

It will be appreciated that, although primarily presented with respect to example embodiments in which specific components are used to perform specific functions, in at least some example embodiments other types of components suitable for use in performing those functions may be utilized to perform the functions. For example, although primarily presented with respect to example embodiments in which a specific type of component is used for optical-to-electrical conversion at the receivers (namely, APDs such as the APDs 226-1 of ONU 220-1 and the APD 226-2 of ONU 220-2), other suitable components may be used for optical-to-electrical conversion at the receivers (e.g., an APD with a transimpedance amplifier, (APD-TIA, a PIN photodiode, a PIN-TIA photoreceiver, or the like, as well as various combinations thereof).

It will be appreciated that the PON 200 illustrated merely a few of the ways in which frequency tones may be applied at a transmitter for SBS suppression and processed at a receiver for polarization tracking.

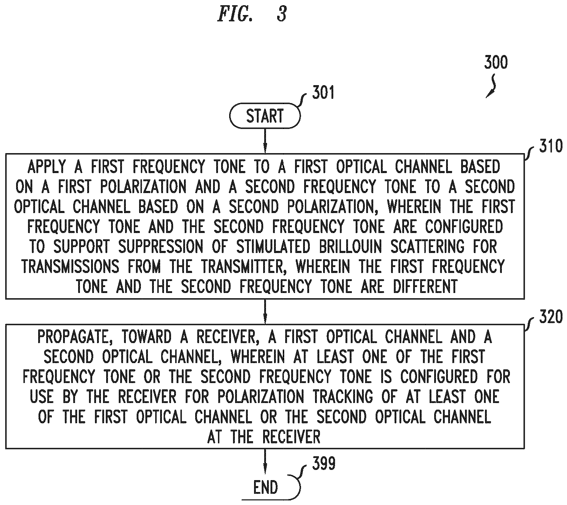

FIG. 3 depicts an example embodiment of a method for use by a transmitter to support backscattering suppression in a PON configured to support joint backscattering suppression and polarization tracking. It will be appreciated that, although primarily presented as being performed serially, at least a portion of the functions of the method 300 may be performed contemporaneously or in a different order than as presented with respect to FIG. 3. At block 301, method 300 begins. At block 310, apply a first frequency tone to a first optical channel based on a first polarization and a second frequency tone to a second optical channel based on a second polarization, wherein the first frequency tone and the second frequency tone are configured to support suppression of stimulated Brillouin scattering for transmissions from the transmitter, wherein the first frequency tone and the second frequency tone are different. At block 320, propagate, toward a receiver, the first optical channel and the second optical channel, wherein at least one of the first frequency tone or the second frequency tone is configured for use by the receiver for polarization tracking of at least one of the first optical channel or the second optical channel at the receiver. At block 399, the method 300 ends. It will be appreciated that various functions presented herein with respect to FIG. 1 and FIG. 2 may be incorporated within the context of method 300 of FIG. 3.

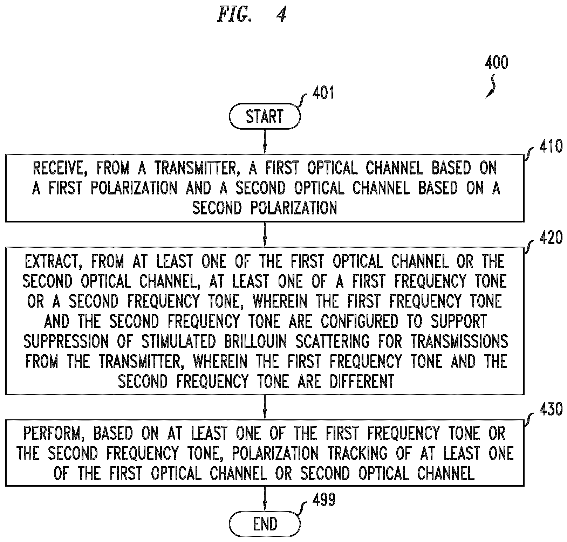

FIG. 4 depicts an example embodiment of a method for use by a receiver to support polarization tracking in a PON configured to support joint backscattering suppression and polarization tracking. It will be appreciated that, although primarily presented as being performed serially, at least a portion of the functions of the method 400 may be performed contemporaneously or in a different order than as presented with respect to FIG. 4. At block 401, method 400 begins. At block 410, receive, from a transmitter, a first optical channel based on a first polarization and a second optical channel based on a second polarization. At block 420, extract, from at least one of the first optical channel or the second optical channel, at least one of a first frequency tone or a second frequency tone, wherein the first frequency tone and the second frequency tone are configured to support suppression of stimulated Brillouin scattering for transmissions from the transmitter, wherein the first frequency tone and the second frequency tone are different. At block 430, perform, based on at least one of the first frequency tone or the second frequency tone, polarization tracking of at least one of the first optical channel or the second optical channel. At block 499, the method 400 ends. It will be appreciated that various functions presented herein with respect to FIG. 1 and FIG. 2 may be incorporated within the context of method 400 of FIG. 4.

Various example embodiments for supporting joint SBS suppression and polarization tracking in PON systems may provide various advantages or potential advantages. For example, various example embodiments for supporting joint SBS suppression and polarization tracking in PON systems may be configured to support SBS suppression and polarization tracking based on use of a frequency tone per channel for SBS suppression for transmissions from the transmitter and polarization tracking at the receiver. It will be appreciated that various example embodiments for supporting joint SBS suppression and polarization tracking in PON systems may provide various other advantages or potential advantages.

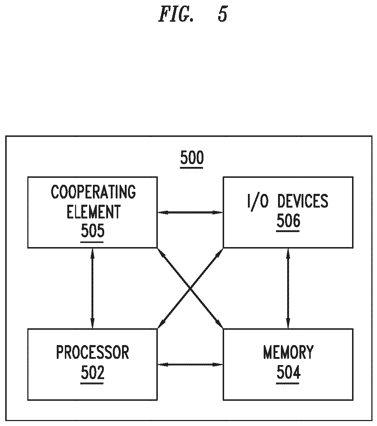

FIG. 5 depicts an example embodiment of a computer suitable for use in performing various functions presented herein.

The computer 500 includes a processor 502 (e.g., a central processing unit (CPU), a processor, a processor having a set of processor cores, a processor core of a processor, or the like) and a memory 504 (e.g., a random access memory (RAM), a read-only memory (ROM), or the like). In at least some example embodiments, the computer 500 may include at least one processor and at least one memory storing instructions that, when executed by the at least one processor, cause the computer to perform various functions presented herein.

The computer 500 also may include a cooperating element 505. The cooperating element 505 may be a hardware device. The cooperating element 505 may be a process that can be loaded into the memory 504 and executed by the processor 502 to implement various functions presented herein (in which case, for example, the cooperating element 505 (including associated data structures) can be stored on a non-transitory computer readable medium, such as a storage device or other suitable type of storage element (e.g., a magnetic drive, an optical drive, or the like)).

The computer 500 also may include one or more input/output devices 506. The input/output devices 506 may include one or more of a user input device (e.g., a keyboard, a keypad, a mouse, a microphone, a camera, or the like), a user output device (e.g., a display, a speaker, or the like), one or more network communication devices or elements (e.g., an input port, an output port, a receiver, a transmitter, a transceiver, or the like), one or more storage devices (e.g., a tape drive, a floppy drive, a hard disk drive, a compact disk drive, or the like), or the like, as well as various combinations thereof.

It will be appreciated that computer 500 may represent a general architecture and functionality suitable for implementing functional elements described herein, portions of functional elements described herein, or the like, as well as various combinations thereof. For example, the computer 500 may provide a general architecture and functionality that is suitable for implementing one or more elements presented herein. For example, the computer 500 may provide a general architecture and functionality that is suitable for implementing at least one of one or more elements of an OLT or portions or combinations thereof, one or more elements of an ONU or portions or combinations thereof, or the like, as well as various combinations thereof.

It will be appreciated that at least some of the functions presented herein may be implemented in software (e.g., via implementation of software on one or more processors, for executing on a general purpose computer (e.g., via execution by one or more processors) so as to provide a special purpose computer, and the like) and/or may be implemented in hardware (e.g., using a general purpose computer, one or more application specific integrated circuits, and/or any other hardware equivalents).

It will be appreciated that at least some of the functions presented herein may be implemented within hardware, for example, as circuitry that cooperates with the processor to perform various functions. Portions of the functions/elements described herein may be implemented as a computer program product wherein computer instructions, when processed by a computer, adapt the operation of the computer such that the methods and/or techniques described herein are invoked or otherwise provided. Instructions for invoking the various methods may be stored in fixed or removable media (e.g., non-transitory computer readable media), transmitted via a data stream in a broadcast or other signal bearing medium, and/or stored within a memory within a computing device operating according to the instructions.

It will be appreciated that the term "non-transitory" as used herein is a limitation of the medium itself (i.e., tangible, not a signal) as opposed to a limitation of data storage persistency (e.g., RAM versus ROM).

It will be appreciated that, as used herein, "at least one of <a list of two or more elements>" and "at least one of the following: <a list of two or more elements>" and similar wording, where the list of two or more elements are j oined by "and" or "or", mean at least any one of the elements, or at least any two or more of the elements, or at least all the elements.

It will be appreciated that, as used herein, the term "or" refers to a non-exclusive "or" unless otherwise indicated (e.g., use of "or else" or "or in the alternative").

It will be appreciated that, although various embodiments which incorporate the teachings presented herein have been shown and described in detail herein, those skilled in the art can readily devise many other varied embodiments that still incorporate these teachings.

## Claims

1. A system, comprising:
a transmitter configured to apply a first frequency tone to a first optical channel based on a first polarization and to apply a second frequency tone to a second optical channel based on a second polarization, wherein the first frequency tone and the second frequency tone are configured to support suppression of stimulated Brillouin scattering for transmissions from the transmitter, wherein the first frequency tone and the second frequency tone are different; and
a receiver configured to utilize at least one of the first frequency tone or the second frequency tone for polarization tracking of at least one of the first optical channel based on the first polarization or the second optical channel based on the second polarization.

2. The system according to claim 1, wherein the first frequency tone and the second frequency tone are within a range of frequency tones configured for use in supporting suppression of stimulated Brillouin scattering.

3. The system according to any of claims 1 to 2, wherein at least one of the first frequency tone or the second frequency tone is applied for amplitude modulation to support suppression of stimulated Brillouin scattering for transmissions from the transmitter.

4. The system according to any of claims 1 to 2, wherein at least one of the first frequency tone or the second frequency tone is applied for phase modulation to support suppression of stimulated Brillouin scattering for transmissions from the transmitter.

5. The system according to any of claims 1 to 4, wherein the first frequency tone is applied to at least one of a digital-to-analog converter associated with the first optical channel, an electrical amplifier associated with the first optical channel, a laser associated with the first optical channel, an external modulator associated with the first optical channel, a phase modulator associated with the first optical channel, or an optical amplifier associated with the first optical channel.

6. The system according to any of claims 1 to 4, wherein the second frequency tone is applied to at least one of a digital-to-analog converter associated with the second optical channel, an electrical amplifier associated with the second optical channel, a laser associated with the second optical channel, an external modulator associated with the second optical channel, a phase modulator associated with the second optical channel, or an optical amplifier associated with the second optical channel.

7. The system according to any of claims 1 to 6, wherein the transmitter includes:
a first frequency tone generator configured to generate the first frequency tone and apply the first frequency tone to the first optical channel; and
a second frequency tone generator configured to generate the second frequency tone and apply the second frequency tone to the second optical channel.

8. An apparatus, comprising:
a transmitter configured to:
apply a first frequency tone to a first optical channel based on a first polarization and a second frequency tone to a second optical channel based on a second polarization, wherein the first frequency tone and the second frequency tone are configured to support suppression of stimulated Brillouin scattering for transmissions from the transmitter, wherein the first frequency tone and the second frequency tone are different; and
propagate, toward a receiver, the first optical channel and the second optical channel, wherein at least one of the first frequency tone or the second frequency tone is configured for use by the receiver for polarization tracking of at least one of the first optical channel or the second optical channel at the receiver.

9. The apparatus according to claim 8, wherein the first frequency tone and the second frequency tone are within a range of frequency tones configured for use in supporting suppression of stimulated Brillouin scattering.

10. The apparatus according to any of claims 8 to 9, wherein at least one of the first frequency tone or the second frequency tone is applied for amplitude modulation to support suppression of stimulated Brillouin scattering for transmissions from the transmitter.

11. The apparatus according to any of claims 8 to 9, wherein at least one of the first frequency tone or the second frequency tone is applied for phase modulation to support suppression of stimulated Brillouin scattering for transmissions from the transmitter.

12. An apparatus, comprising:
a receiver configured to:
receive, from a transmitter, a first optical channel based on a first polarization and a second optical channel based on a second polarization;
extract, from at least one of the first optical channel or the second optical channel, at least one of a first frequency tone or a second frequency tone, wherein the first frequency tone and the second frequency tone are configured to support suppression of stimulated Brillouin scattering for transmissions from the transmitter, wherein the first frequency tone and the second frequency tone are different; and
perform, based on at least one of the first frequency tone or the second frequency tone, polarization tracking of at least one of the first optical channel or the second optical channel.

13. The apparatus according to claim 12, wherein the first frequency tone and the second frequency tone are within a range of frequency tones configured for use in supporting suppression of stimulated Brillouin scattering.

14. The apparatus according to any of claims 12 to 13, wherein the receiver is configured to utilize at least one of the first frequency tone or the second frequency tone for polarization tracking of at least one of the first optical channel or the second optical channel at the receiver.

15. The apparatus according to any of claims 12 to 14, wherein the receiver is configured to generate, based on at least one of the first frequency tone or the second frequency tone, a feedback signal for a polarization controller, and perform, based on the feedback signal for the polarization controller, polarization tracking of at least one of the first optical channel or the second optical channel at the receiver.
